# EUROPEAN PATENT APPLICATION

(11) **EP 4 289 549 A1**
(43) Date of publication of application: **13.12.2023**
(21) Application number: 21945250.5
(22) Date of filing: 23.12.2021
(51) Int. Cl.: B23Q 11/00, B23Q 11/08, B23Q 17/09, B23Q 17/24

(54) **MACHINE TOOL**

(30) Priority: 07.06.2021 JP 2021094980; 05.07.2021 JP 2021111486
(71) Applicant: DMG Mori Co., Ltd., Yamatokoriyama-shi, Nara 639-1160 (JP)
(72) Inventor: MATSUSHITA, Hiroto, Yamatokoriyama-shi, Nara 639-1160 (JP)
(74) Representative: Isarpatent
(86) International application number: PCT/JP2021/047771
(87) International publication number: WO 2022/259582

(57) **Abstract**

A machine tool includes an imaging portion for imaging a tool in an imaging area, a tool holding unit capable of holding the tool in the imaging area, a shutter provided between a machining area and the imaging area, and being movable between an open state and a closed state, a cover for covering a light-receiving surface of the imaging portion, and a purge mechanism for performing purge by causing fluid to flow between a light-receiving surface of the imaging portion and the cover. (i) After the purge by the purge mechanism is performed, the machine tool (ii) moves the shutter, and (iii) moves the cover after start of moving of the shutter.

## Description

### Technical Field

The present invention relates to a technology for preventing contaminants from adhering to an imaging portion included in a machine tool.

### Background Art

Machine tools include devices for cutting a workpiece into a desired shape, and devices for depositing metal powder or the like to make a workpiece. Examples of machine tools for cutting include a turning center that machines a workpiece by applying a cutting tool to the workpiece that is being turned, a machining center that machines a workpiece by applying a turning tool to the workpiece, and a combined machine including these functions in combination.

A tool is fixed to a tool holding unit such as a spindle or a tool rest (turret). A machine tool machines a workpiece by changing tools and moving the tool holding unit in accordance with a machining program provided in advance (refer to Patent Literature 1).

### Related Art List

Patent Literature 1: JP 2016-218550 A

### Summary

### Technical Problem

In some cases, the state of a tool in use mounted on a tool holding unit is to be checked.

There is conceived a method in which an imaging area is provided in a machining chamber, a tool is inserted into the imaging area and imaged with a camera, and the state of the tool is checked on the basis of a taken image. In this case, since swarf of a workpiece, a coolant, or the like adheres to a tool immediately after use, the camera may be contaminated by the adhering matters on the tool.

### Solution to problem

To solve the above problem, the present disclosure provides a technology described in claims.

### Advantageous Effects of Invention

According to the present invention, adhesion of contaminants to an imaging portion included in a machine can be prevented.

### Brief Description of Drawings

FIG. 1 is an external view of a machine tool.
FIG. 2 is a perspective view of a tool recognition area and its surroundings.
FIG. 3 is a schematic diagram illustrating a positional relation among a tool, a camera, and an illumination device in the tool recognition area.
FIG. 4 is a side cross-sectional view of mechanisms in the tool recognition area.
FIG. 5 is a cross-sectional view illustrating an air flow.
FIG. 6 is a hardware configuration diagram of the machine tool and an image processing device.
FIG. 7 is a flowchart illustrating a processing procedure when tool test is performed.
FIG. 8 is a flowchart illustrating a processing procedure of measurement processing.
FIG. 9 is a side view illustrating an internal configuration of a tool storage unit in a first modification.
FIG. 10 is a perspective view schematically illustrating a configuration of the inside of the tool storage unit in the first modification.
FIG. 11 is a perspective view of a tool recognition area in an implementation example of the machine tool.
FIG. 12 is a side view of the tool recognition area in the implementation example of the machine tool.
FIG. 13 is a side view of the tool recognition area in the implementation example of the machine tool.
FIG. 14 is a front view schematically illustrating a boundary between a containing chamber and a machining area and its surroundings.
FIG. 15 is a side view illustrating a movable range of a tool change unit and a movable range of a first cover.

### Description of Embodiments

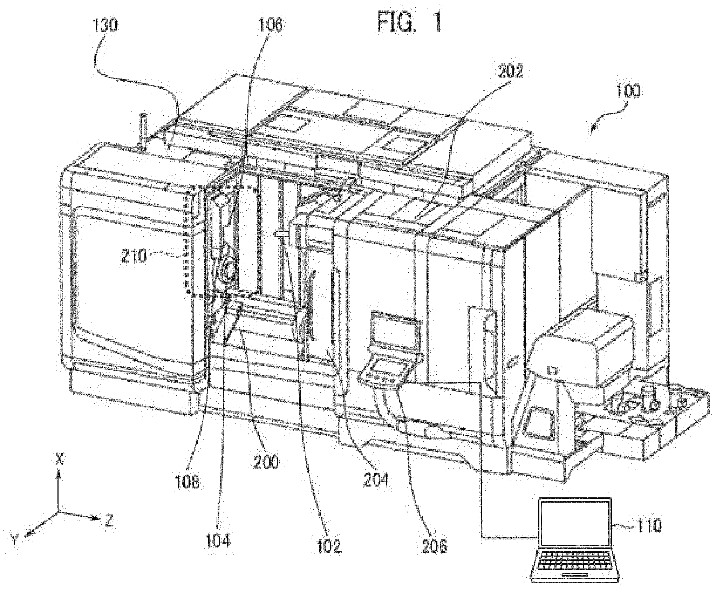

FIG. 1 is an external view of a machine tool 100.

The machine tool 100 in the present embodiment is a combined machine for machining a workpiece placed in a machining area 200. The workpiece is fixed to a holding unit 104 and cut by a tool 102 attached to a spindle, which is another holding unit. The holding unit 104 holding the workpiece is rotationally driven by a driving mechanism.

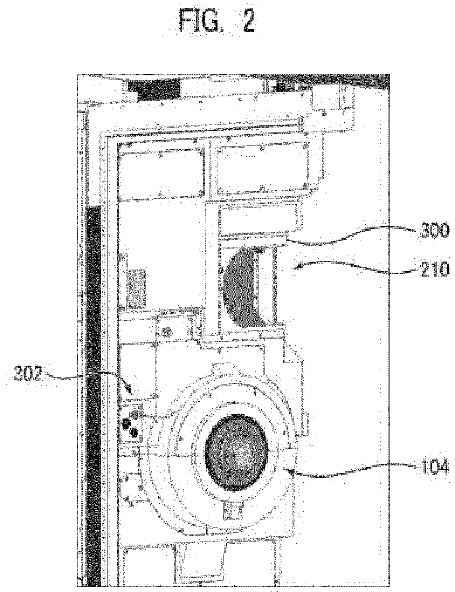

A tool recognition area 210 is an example of an imaging area. When the tool 102 is inserted into the tool recognition area 210, an illumination device 108 located thereabove illuminates the tool 102, and the camera 106 located therebelow takes an image of the tool 102. Tool test is performed on the basis of the taken image. A configuration of the tool recognition area 210 will be described later in connection with the following FIGS. 2, 3, and 4.

The machine tool 100 is provided with a cover 202 that shuts the machine tool 100 off from the outside. The cover 202 includes a door 204. An operator opens the door 204 to install a workpiece in the machining area 200 and to remove the workpiece from the machining area 200. An operation panel 206 accepts various operations on the machine tool 100 from the operator.

The operation panel 206 is connected to an image processing device 110. The operator can remotely monitor the work status of the machine tool 100 with the image processing device 110. In the present embodiment, the main unit of the machine tool 100 and the image processing device 110 are connected with each other via a cable. The image processing device 110 may be included in the machine tool 100, as an internal device of the operation panel 206, for example.

A tool storage unit 130 stores a plurality of tools 102. A tool 102 is selected from the plurality of tools 102 stored in the tool storage unit 130 by a tool change unit (described later) and attached to the spindle. As shown in FIG. 1, the Y- and Z-axes are defined in the horizontal direction, and the X-axis is defined in the vertical direction. The Z-axis direction corresponds to the axial direction of the spindle and the workpiece.

FIG. 2 is a perspective view of the tool recognition area 210 and its surroundings.

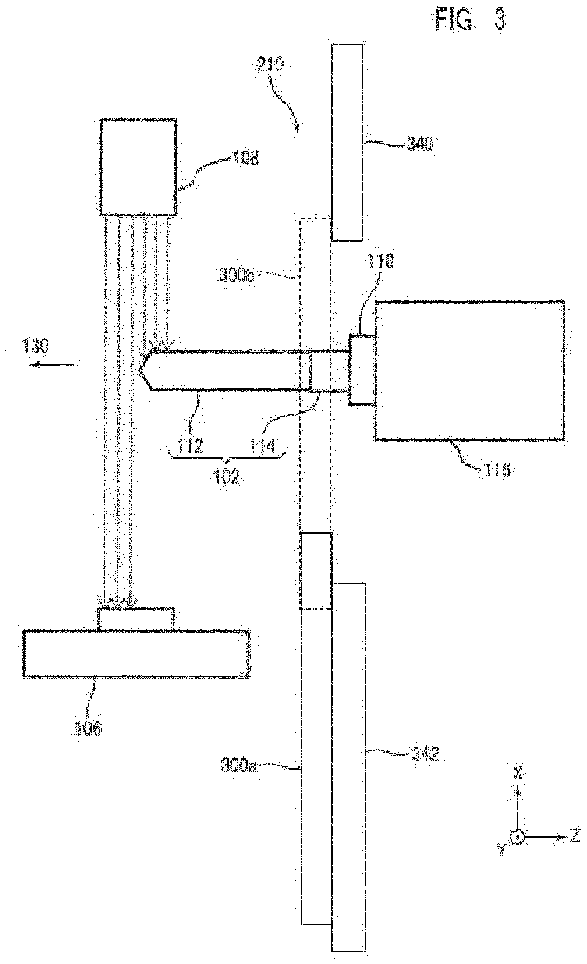

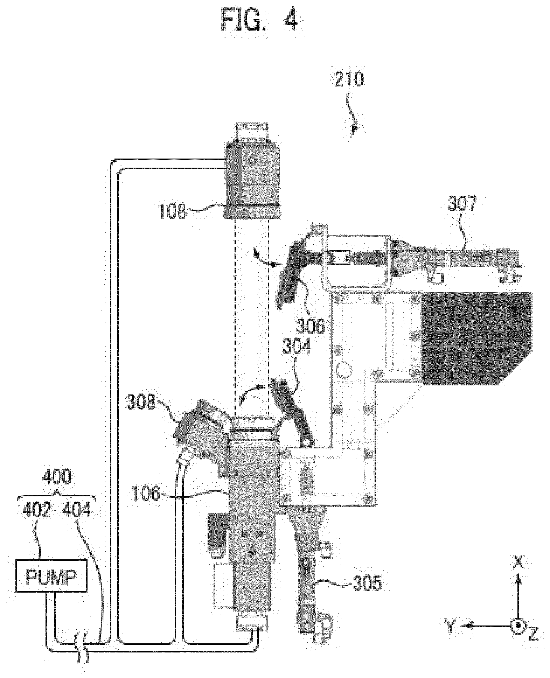

The tool recognition area 210 is formed in a part of the machining area 200. Specifically, the tool recognition area 210 (a space) is formed above the holding unit 104 to which a workpiece is fixed. The tool recognition area 210 includes the camera 106 and the illumination device 108 (which will be described later in connection with FIGS. 3 and 4).

A shutter 300 is a movable partition plate (one kind of cover) that closes the tool recognition area 210. During machining of a workpiece, the tool recognition area 210 is closed with the shutter 300. A coolant that is a cooling liquid for removing frictional heat produced between the workpiece and the tool 102 is injected in the machining area 200 during machining. Swarf of the workpiece also scatters in the machining area 200. Therefore, by closing the tool recognition area 210 with the shutter 300, entrance of the coolant, the swarf, or the like into the tool recognition area 210 is prevented. As described above, the shutter 300 is provided between the machining area 200 where machining using the tool 102 is performed and the tool recognition area 210 serving as an imaging area, and is movable between an open state and a closed state.

When tool test is instructed by a measurement command or the like, the machine tool 100 stops machining of a workpiece. At this time, the machine tool 100 stops also the injection of the coolant. The spindle moves the tool 102 to a predetermined position (hereinafter, a "standby position") in front of the tool recognition area 210 and rotates the tool 102 at the standby position at high speed. By the high-speed rotation of the tool 102, the coolant and the swarf adhering to the tool 102 (hereinafter, collectively "adhering matters") are spun off. Hereinafter, the high-speed rotation of the tool 102 performed at the standby position in order to remove the adhering matters is referred to as "cleaning rotation".

After the cleaning rotation, the shutter 300 opens, and the tool 102 is caused to enter the tool recognition area 210. The tool shape is checked by imaging the tool 102 inserted into the tool recognition area 210 with the camera 106. Insertion of the tool 102 into the tool recognition area 210 and test of the shape of the tool 102 are referred to as "tool test".

The machining area 200 leads to the tool storage unit 130 through the tool recognition area 210. That is, a room for the tool recognition area 210 is located between the tool storage unit 130 and the machining area 200, and imaging of the tool 102 is performed there. However, when tool change is performed, the spindle is inserted deeply into the tool recognition area 210. Not only in tool test but also in tool change, the tool 102 passes through the tool recognition area 210. Therefore, cleaning rotation is performed similarly before passing of the tool.

An air nozzle 302 is installed next to the holding unit 104. The air nozzle 302 injects air. By moving the spindle near the air nozzle 302 and causing the air nozzle 302 to inject air, the adhering matters on the tool 102 can also be removed. Hereinafter, air injection from the air nozzle 302 to the tool 102 performed in order to remove the adhering matters is referred to as "cleaning injection".

FIG. 3 is a schematic diagram illustrating a positional relation among the tool 102, the camera 106, and the illumination device 108 in the tool recognition area 210.

The tool 102 includes a blade part 112 to be used for machining of a workpiece, and a shank part 114 being a region to be fixed to a holder 118 of the spindle 116. The spindle 116 is configured to be rotatable and movable while holding the tool 102. The spindle 116 which also serves as a holding unit can also rotate a tool held thereby. In a case of a machining center as described in this example, the spindle 116 corresponds to a "tool holding unit capable of holding a tool in an imaging area". In a case of a turning center, a tool rest corresponds to the "tool holding unit capable of holding a tool in an imaging area".

The camera 106 includes an image sensor (image pickup element) such as a complementary metal oxide semiconductor (CMOS) or charge-coupled device (CCD). The camera 106 takes images of the tool 102 attached to the spindle 116 from below (in the X-axis direction). The camera 106 is fixed to view the tool recognition area 210. As the spindle 116 rotates the tool 102 about the Z axis, the tool 102 can be imaged in a plurality of directions. In addition, as the spindle 116 moves the tool 102 in the horizontal direction (YZ direction), a plurality of positions of the tool 102 can be imaged.

The illumination device 108 is fixed at an upper location to face the camera 106. The illumination device 108 illuminates the tool 102 from above. Transmitted illumination by the illumination device 108 enables the camera 106 to take a high-contrast image in which the outline position of the tool 102 is easily viewable.

When newly registering the tool 102, a user sets a tool registration mode on the operation panel 206 and attaches the new tool 102 to the spindle 116. The user then inputs a freely-selected tool ID. The spindle 116 moves and rotates the tool 102, and the fixed camera 106 automatically images the tool 102 from various positions and directions. The tool shape is recognized from many images taken by the camera 106, and the tool ID and the tool shape are registered in association with each other. With this control method, the tool shape can be automatically registered for each tool 102 in association with the tool ID. In the following description, the shape of the tool 102 recognized in new registration is referred to as a "registered shape". Tool shape data is created as two-dimensional data or three-dimensional data.

In addition, also when tool test is performed on the tool 102 that is being used or has been used for machining, the spindle 116 causes the tool 102 to enter the tool recognition area 210. Similarly at the time of new registration, the spindle 116 moves and rotates the tool 102, and the camera 106 automatically images the tool 102 from various positions and directions. The tool shape is recognized from many images taken by the camera 106. In the following description, the shape of the tool 102 recognized in test is referred to as a "tested shape". An operator compares the registered shape (an initial state) and the tested shape with each other, thereby determining the degree of abrasion of the tool 102 and whether a fracture is present.

As illustrated in FIG. 3, the shutter 300 is provided inside an upper wall 340 and a lower wall 342 that surround the tool recognition area 210. The shutter 300 may be provided outside the upper wall 340 and the lower wall 342. The shutter 300 is movable in the X-axis direction (the up-down direction). An opening between the upper wall 340 and the lower wall 342 is open (an open state) in a state where a shutter 300a is at its lower position. When a shutter 300b is moved upward while there is no tool 102 in the tool recognition area 210, the opening between the upper wall 340 and the lower wall 342 is closed (a closed state). As described above, by moving the shutter 300 upward and downward, drop (scattering) of a coolant adhering to the shutter 300 can be prevented. In the example in FIG. 2, the opening between the upper wall 340 and the lower wall 342 is open (an open state) in a state where the shutter 300 is located at its upper position. When the shutter 300 is moved downward while there is no tool 102 in the tool recognition area 210, the opening between the upper wall 340 and the lower wall 342 is closed (a closed state). The open state may be changed to the closed state by moving the shutter 300, configured to be movable in the Y-axis direction (the transverse direction), in the Y-axis direction (the transverse direction), and vice versa. Furthermore, the open state may also be changed to the closed state by moving the shutter 300, configured to be movable in the X-axis direction (the up-down direction) and the Y-axis direction (in the transverse direction), in both the X-axis direction (the up-down direction) and the Y-axis direction (the transverse direction) at the same time, and vice versa.

FIG. 4 is a side cross-sectional view of mechanisms in the tool recognition area 210.

The tool 102 is inserted between the camera 106 and the illumination device 108. An illumination device 308 for illuminating the tool 102 from below is also installed to the side of the camera 106. A first cover 304 for covering a light-receiving surface of the camera 106 is installed next to the camera 106. A second cover 306 for covering a light-emitting surface of the illumination device 108 is installed next to the illumination device 108. Hereinafter, the first cover 304 and the second cover 306 may be collectively referred to as "inner covers".

The first cover 304 is attached to be rotatable about the Z-axis as a rotation axis and is driven to rotate. A first cylinder 305 coupled to the first cover 304 is caused to expand and contract by, for example, an operation of a built-in solenoid. The first cover 304 closes the light-receiving surface of the camera 106 in a state where the first cylinder 305 expands, and opens the light-receiving surface of the camera 106 in a state where the first cylinder 305 contracts.

The second cover 306 is attached to be rotatable about the Z-axis as a rotation axis and is driven to rotate. A second cylinder 307 coupled to the second cover 306 is caused to expand and contract by, for example, an operation of a built-in solenoid. The second cover 306 closes the light-emitting surface of the illumination device 108 in a state where the second cylinder 307 expands, and opens the light-emitting surface of the illumination device 108 in a state where the second cylinder 307 contracts.

The machine tool 100 includes a purge mechanism 400. The purge mechanism 400 includes a pump 402 that pumps out fluid (compressed air in this example) and a pipe 404 that sends the fluid (the compressed air in this example) to the camera 106, the illumination device 108, and the illumination device 308. An example of air purge using the compressed air is described below.

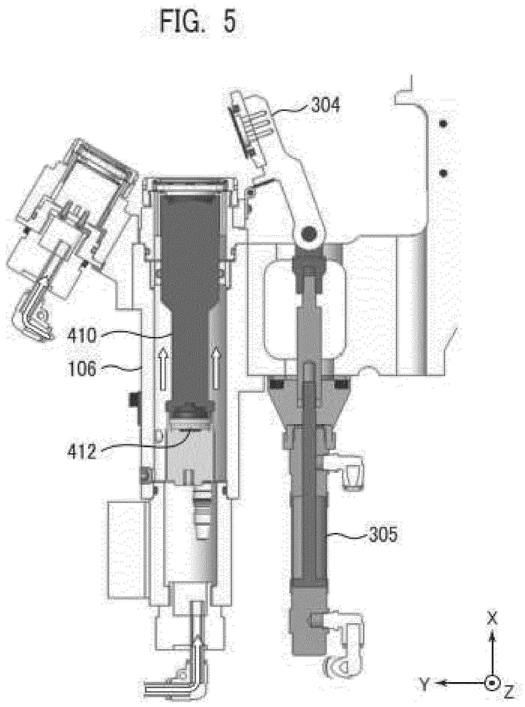

FIG. 5 is a cross-sectional view illustrating an air flow.

A mechanism of air purge is described. An image sensor 412 and a lens component 410 are provided in the camera 106. Air flowing into the camera 106 passes by the image sensor 412 and the lens component 410 toward the light-receiving surface of the camera 106 and is released to outside through a gap near the light-receiving surface of the camera 106. Impurities (e.g., mist of a coolant) inside the camera 106 are discharged by such an air flow. At this time, since the air released through the gap near the light-receiving surface flows between the light-receiving surface of the camera 106 and the closed first cover 304, the air removes adhering matters (dirt) on the light-receiving surface of the camera 106 and on a covering surface of the first cover 304. While the first cover 304 is open, the air keeps the adhering matters (dirt) away from the light-receiving surface. As described above, purge is performed by causing fluid to flow between the light-receiving surface of the camera 106 and the first cover 304.

Similarly for the illumination device 308, air flowing into the illumination device 308 is discharged from near the light-emitting surface of the illumination device 308. Impurities (e.g., mist of a coolant) inside the illumination device 308 are thus discharged, so that adhering matters (dirt) on the light-emitting surface of the illumination device 308 are removed. Further, similarly for the illumination device 108, air flowing into the illumination device 108 is discharged from near the light-emitting surface of the illumination device 108. Impurities (e.g., mist of a coolant) inside the illumination device 108 are thus discharged, so that adhering matters (dirt) on the light-emitting surface of the illumination device 108 and on a covering surface of the second cover 306 are removed.

A space in equipment such as the camera 106, the illumination device 308, and the illumination device 108, through which the fluid flows, and an outlet via which the fluid is caused to flow out from the equipment are also parts of the purge mechanism 400. The compressed air in this example is an example of the fluid caused to flow for purge. The fluid caused to flow for purge may be gas other than air, or may be liquid.

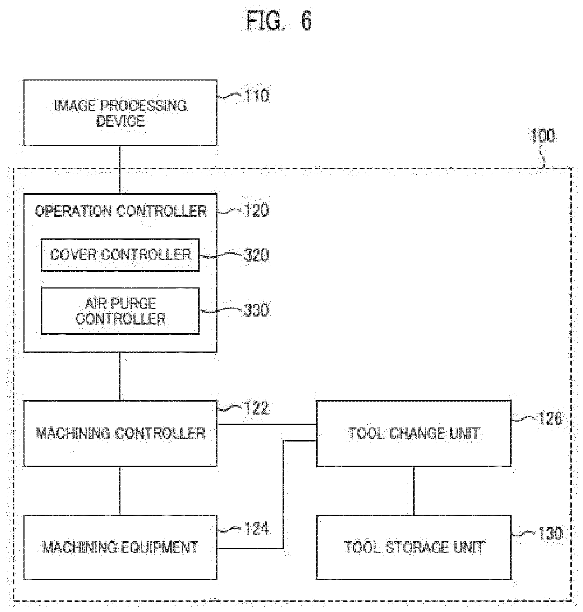

FIG. 6 is a hardware configuration diagram of the machine tool 100 and the image processing device 110.

The machine tool 100 includes an operation controller 120, a machining controller 122, machining equipment 124, a tool change unit 126, and the tool storage unit 130. The machining controller 122 functioning as a numerical controller transmits control signals to the machining equipment 124 in accordance with a machining program. The machining equipment 124 drives the spindle 116 to machine a workpiece in accordance with instructions from the machining controller 122.

The operation controller 120 includes the operation panel 206 and controls the machining controller 122. The tool storage unit 130 has tools stored therein. The tool change unit 126 corresponds to a so-called ATC (Automatic Tool Changer). The tool change unit 126 takes out a tool from the tool storage unit 130 and changes a tool on the spindle 116 with the tool thus taken out in accordance with a change instruction from the machining controller 122.

The operation controller 120 includes a cover controller 320. The cover controller 320 causes the shutter 300 (one kind of a cover) and the inner covers (the first cover 304 and the second cover 306) to open and close. An air purge controller 330 controls air purge that causes the pump 402 to operate and send compressed air. The air purge controller 330 is an example of a purge controller controlling purge that sends fluid.

The image processing device 110 mainly performs image processing such as recognition of tool shapes. As described above, the image processing device 110 may be part of the operation controller 120. The image processing device 110 may be a common laptop personal computer (PC) or tablet computer.

The image processing device 110 includes an input unit that accepts inputs made by a user via a touch panel or a hardware device such as a handle, an output unit that provides various types of information to the user via image display and audio output, a data storage unit that stores various types of data therein, a data processor that performs various types of arithmetic processing, and a communication unit that performs processing of communication with the operation controller 120. The data processor includes a tool check unit that generates data indicating the three-dimensional shape of the tool 102 (tool shape data) on the basis of taken images and performs tool test. This example adopts a method of taking a plurality of partial images of the tool 102 with the relatively small camera 106 a plurality of times, and recognizing the shape of the whole tool 102 on the basis of a plurality of taken images. Hereinafter, an image of a part of the tool 102 taken by the camera 106 is referred to as a "partial image".

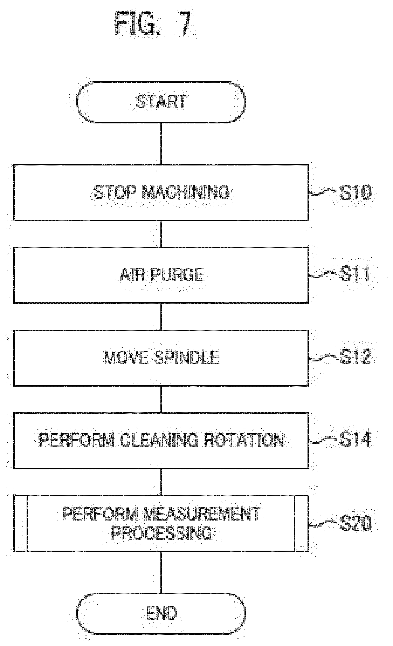

FIG. 7 is a flowchart illustrating a processing procedure when tool test is performed.

When a predetermined measurement command MX is detected in a machining program, the processing in FIG. 7 is started. Tool test is performed also when any interference occurs or an operator inputs a measurement instruction from the operation panel 206 or the image processing device 110.

Upon detection of the measurement command MX, the machining controller 122 stops the spindle 116 and suspends machining of a workpiece (S10). The air purge controller 330 then starts the pump 402 to start air purge (S11). Since it takes some time to send compressed air stably, the pump 402 is started early. However, the pump 402 may be started at any timing before a shutter is opened. The pump 402 may be started after moving of the spindle 116 (S12) described later or after cleaning rotation.

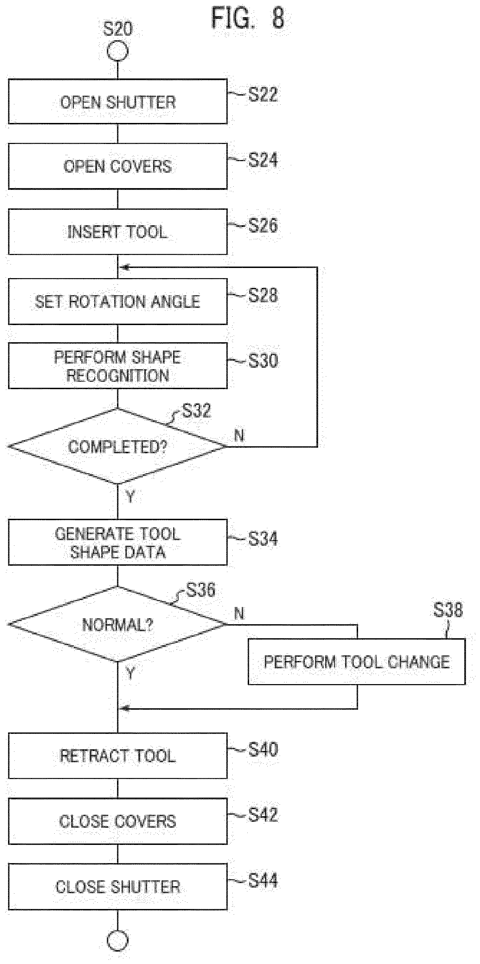

Subsequently, the machining controller 122 moves the spindle 116 to a standby position in front of the tool recognition area 210 (S12). At this time, the cover controller 320 closes the shutter 300. The spindle 116 is temporarily stopped at the standby position, and the machining controller 122 performs cleaning rotation (S14). By the cleaning rotation, adhering matters are removed from the tool 102. After the cleaning rotation ends, the machining controller 122 notifies the operation controller 120 of end of cleaning, and measurement processing is started (S20). The measurement processing will be described later in detail in connection with the following FIG. 8.

FIG. 8 is a flowchart illustrating a processing procedure of the measurement processing.

After cleaning rotation ends, the cover controller 320 starts an operation of opening the shutter 300 (S22). It is desirable that the cover controller 320 opens the shutter 300 as late as possible in order to prevent entrance of adhering matters or a mist floating in a machining chamber into the tool recognition area 210. More preferably, the cover controller 320 opens the shutter 300 of the tool recognition area 210 immediately before the tool 102 comes into contact with the shutter 300. As a result of opening of the shutter 300, the spindle 116 (the tool 102) can enter the tool recognition area 210. Subsequently, the cover controller 320 opens inner covers (the first cover 304 and the second cover 306) after the shutter 300 starts its opening operation (S24). The inner covers may be opened during the opening operation of the shutter 300 or after completion of that opening operation. As a result of opening of the inner covers, imaging of the tool 102 becomes possible in the tool recognition area 210. The operation of opening of the inner covers corresponds to moving of a cover.

Although the first cover 304 and the second cover 306 may be opened simultaneously with each other, it is desirable that the upper one of them is opened first. This is because the adhering matters may fall when the upper cover is opened. In this example, the cover controller 320 opens the second cover 306 first because the second cover 306 is the upper cover. After waiting time required for fall of the adhering matters, the cover controller 320 opens the first cover 304. Accordingly, operations are performed in order of opening of the shutter 300, opening of the second cover 306, opening of the first cover 304, imaging, closing the first cover 304, closing of the second cover 306, and closing of the shutter 300. By adopting this order, it is possible to prevent the adhering matters dropping from the second cover 306 from adhering to the light-receiving surface of the camera 106 again. In a case where the camera 106 is arranged at an upper position, it is desirable to open the first cover 304 first and then open the second cover 306 for an identical reason. By performing the operations in this order, it is possible to prevent the adhering matters dropping from the first cover 304 from adhering to the light-emitting surface of the illumination device 108 again.

When opening of the shutter and the inner covers is completed, the cover controller 320 notifies the machining controller 122 of completion of opening the covers. The machining controller 122 moves the spindle 116 to insert the tool 102 into the imaging area 210 (S26).

The machining controller 122 sets a spindle rotation angle (S28). After setting the spindle rotation angle, the machining controller 122 moves the spindle 116 in the Y- and Z-axis directions, and a tool check portion 152 performs shape recognition for the tool 102 by acquiring a plurality of partial images (S30). In the shape recognition process, the outline of the tool 102 is identified as point sequence data at the set spindle rotation angle. When there is an unset spindle rotation angle (N in S32), the process returns to S28 to set a next rotation angle (for example, 12 degrees). When the shape recognition process has been performed for a total of 30 spindle rotation angles (Y in S32), the tool check portion 152 generates tool shape data (a tested shape) indicating the three-dimensional shape of the tool 102 from the point sequence data obtained with regard to the respective spindle rotation angles (S34).

The image processing device 110 causes the tested shape and a registered shape to be displayed on its screen, and an operator determines whether to perform tool change (S36). The image processing device 110 may automatically determine whether to perform tool change through image recognition, not by operator's visual test. In this case, the image processing device 110 includes a tool determination unit (not illustrated). Specifically, the tool determination unit determines that there is a fracture in the tool 102, in other words, the tool 102 is faulty when the degree of similarity, in particular, contour similarity between the registered shape and the tested shape is equal to or less than a predetermined value. For example, the tool determination unit may determine that there is a fracture in the tool 102 when a ratio (B/A) of a blade length A detected from the registered shape and a blade length B detected from the tested shape is equal to or less than a predetermined value.

When the tool 102 is faulty (N in S36), the image processing device 110 instructs the tool change unit 126 to perform tool change via the machining controller 122 (S38). When the tool 102 is normal (Y in S36), the tool 102 continues to be used without being changed. The machining controller 122 retracts the tool 102 from the tool recognition area 210 (S40). After completion of retraction, the machining controller 122 notifies the operation controller 120 of completion of retraction. The cover controller 320 of the operation controller 120 closes the inner covers first (S42). The cover controller 320 then closes the shutter 300 (S44). Further, the air purge controller 330 stops the pump 402 to end air purge.

As another method, adhering matters may be removed from the tool 102 by cleaning injection. Also in this method, the air purge controller 330 causes air purge to start before start of opening of the shutter. For example, the air purge controller 330 causes air purge to start upon detection of the measurement command MX. Thereafter, the machining controller 122 stops the spindle 116 and suspends machining of a workpiece. The machining controller 122 then moves the spindle 116 to a position in front of the air nozzle 302. After the spindle 116 is temporarily stopped, the air nozzle 302 injects air to the tool 102. By air injection, adhering matters are blown off from the tool 102. After the cleaning injection, the machining controller 122 moves the spindle 116 to a position in front of the tool recognition area 210. The machining controller 122 notifies the operation controller 120 of end of cleaning, and measurement processing is started. The measurement processing is performed in the above-described manner.

### [First modification]

Although the embodiment has described an example in which the tool recognition area 210 where imaging of the tool 102 is performed is provided between the tool storage unit 130 and the machining area 200, imaging of the tool 102 may be performed in a containing chamber including the tool storage unit 130.

A tool storage unit in a first modification is provided with an imaging portion and a movable portion (e.g., a pot of a magazine) that can move when tool change is performed. Therefore, the tool storage unit can be traded as a stand-alone machine.

Similarly, the tool storage unit can also be traded as a machine including the imaging portion and the movable portion that can move when tool change is performed. In this case, the machine is a tool test device that images and tests a tool, and the movable portion is a pot that moves with a next tool accommodated therein in order to perform change to a tool to be imaged, to a tool-change position where an operator can easily perform a change work.

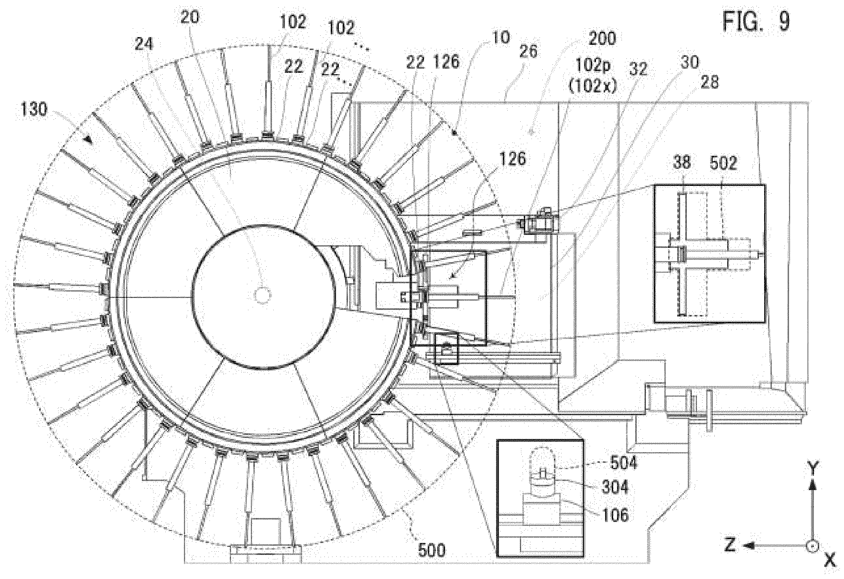

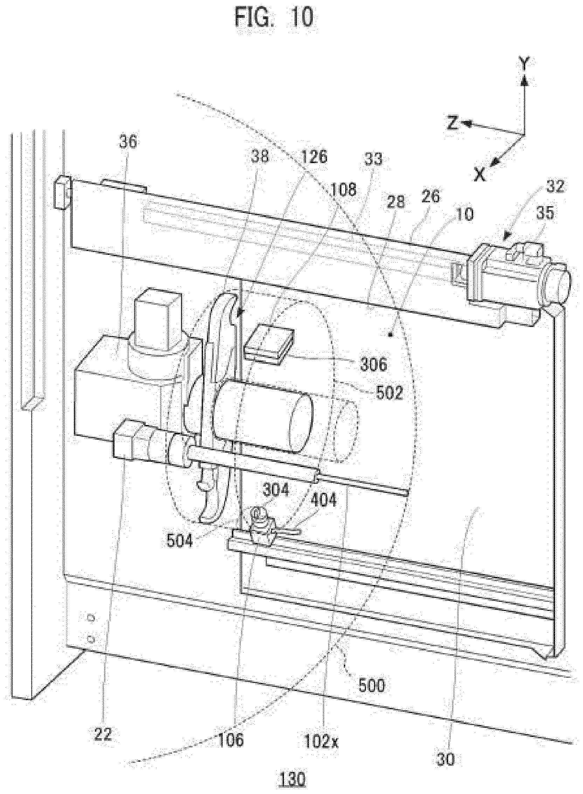

Further, the modification is an example in which the shutter 30 slides in the horizontal direction to switch an open state and a closed state. Therefore, the shutter can slide in the left-right direction to generate the open state and the closed state, as illustrated in FIGS. 9 and 10.

Furthermore, the moving direction of the shutter 30 in the modification is parallel to the axis of rotation of a tool change unit that performs tool change. Accordingly, the machine is a machine tool that performs tool change for a tool spindle having an axis extending in the horizontal direction.

FIG. 9 is a side view illustrating an internal configuration of the tool storage unit 130 in the first modification. A magazine (described later) is illustrated while being partially cut.

The tool storage unit 130 has a disc-shaped magazine 20. A plurality of pots 22 are provided along the outer circumference of the magazine 20, and are configured to be able to accommodate the tools 102, respectively. Each pot 22 supports the tool 102 coaxially therewith, and a plurality of tools are supported radially from a rotation shaft 24 of the magazine 20. In the modification, a chain type or another type of magazine may be adopted.

The magazine 20 rotates about the rotation shaft 24 and supports the tool 102 as an object of tool change horizontally at its front end position (a right end position in FIG. 9). That is, the pot 22 of the magazine 20 serves as a "tool holding unit" that supports the tool 102 as an object of tool change (also a "target tool 102x") in a standby state in a containing chamber 10.

An opening 28 is provided in a partition 26 that partitions the containing chamber 10 and the machining area 200 from each other, and a shutter 30 for opening and closing the opening 28 is provided. Further, an opening/closing mechanism 32 is provided which opens and closes the opening 28 by moving the shutter 30 in the longitudinal direction of the target tool 102x. The opening/closing mechanism 32 can move the shutter 30 between an open state and a closed state. In the containing chamber 10, the tool change unit 126 is provided. The tool change unit 126 changes the tool 102 (also a "pre-use tool 102p") held in a standby state in the containing chamber 10 with the tool 102 (also a "used tool 102u") held on the spindle 116 in the machining area 200. Tool change is performed while the shutter 30 is open.

The target tool 102x is supported horizontally as an object of tool change in the containing chamber 10. The target tools 102x include the pre-use tool 102p immediately before tool change and the used tool 102u immediately after tool change. In the modification, an image of the pre-use tool 102p and an image of the used tool 102u are taken with regard to the same tool. On the basis of comparison between the image of the pre-use tool 102p and the image of the used tool 102u, the state of the used tool 102u (for example, whether the used tool 102u is faulty) is determined.

A movable range 500 of the magazine 20 in which the tools 102 are stored is illustrated in FIG. 9. The movable range 500 of the magazine 20 illustrated here includes an area through which the tool 102 passes in association with rotation of the magazine 20.

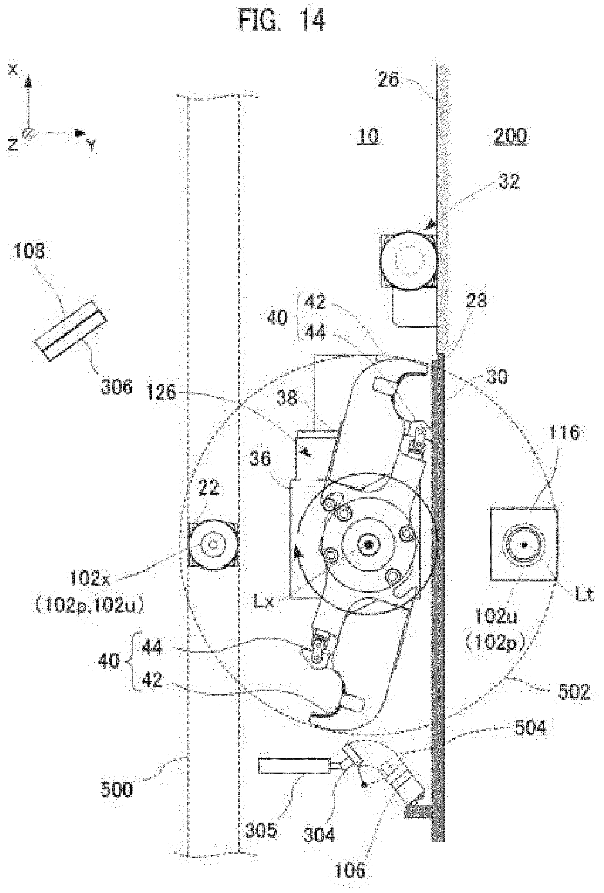

The camera 106 is fixed below the shutter 30 as described later in connection with FIG. 10. In addition, the first cover 304 for covering the light-receiving surface of the camera 106 is provided. A movable range 504 of the first cover 304 is illustrated in FIG. 9, although a mechanism of opening and closing the first cover 304 will be described later in connection with FIG. 14.

The tool change unit 126 including an arm 38 is provided in a space between the target tool 102x and the shutter 30, as described later in connection with FIG. 10. A movable range 502 of the tool change unit 126 is illustrated in FIG. 9. An operation of the tool change unit 126 will be described later.

The movable range 504 of the first cover 304 does not overlap the movable range 502 of the tool change unit 126. Further, the movable range 504 of the first cover 304 does not overlap the movable range 500 of the magazine 20. These points will be described later in connection with FIG. 14.

FIG. 10 is a perspective view schematically illustrating a configuration of the inside of the containing chamber 10 in the first modification. FIG. 14 is a front view schematically illustrating a boundary between the containing chamber 10 and the machining area 200 and its surroundings.

The target tool 102x is supported horizontally in the containing chamber 10, as illustrated in FIG. 10. The shutter 30 is driven by the opening/closing mechanism 32 in the longitudinal direction of the target tool 102x to open and close the opening 28. The opening/closing mechanism 32 includes a screw feed mechanism 33 and a servo motor 35 that drives the screw feed mechanism 33.

The tool change unit 126 is provided in a space between the target tool 102x and the shutter 30. The tool change unit 126 includes a main body 36 with a built-in motor and the arm 38 attached to the rotation shaft of the motor. As illustrated in FIG. 14, the arm 38 has a shape symmetrical with respect to the rotation shaft and includes a grasper 40 at each end. The grasper 40 includes a fixed claw 42 and a movable claw 44. By driving the movable claw 44, a grasping operation with the grasper 40 can be achieved.

In the tool change unit 126, a translation mechanism that moves the arm 38 along an axis and a rotation mechanism that rotates the arm 38 about the axis. The motor includes a first motor that drives the translation mechanism and a second motor that drives the rotation mechanism. Since these mechanisms themselves are known, the detailed description thereof is omitted.

When the tool change unit 126 is not operating, the arm 38 is arranged with its longitudinal direction extending in the up-down direction. With this configuration, the tool change unit 126 can be accommodated in the containing chamber 10 with the shutter 30 closed. When the tool change unit 126 is operating, the pre-use tool 102p stands by on one side (the containing chamber 10 side) of the axis of the arm 38, and the used tool 102u stands by on the other side (the machining area 200 side). The shutter 30 is open in this state.

When the tool change unit 126 operates, the arm 38 is rotated, so that a pair of graspers grasp the pre-use tool 102p and the used tool 102u, respectively. At this time, the arm 38 temporarily straddles the opening 28. When the tool change unit 126 moves the arm 38 to the Z-axis negative side, the pre-use tool 102p leaves the pot 22, and the used tool 102u leaves the spindle 116. Next, when the tool change unit 126 rotates the arm 38 by 180 degrees, the pre-use tool 102p and the used tool 102u are swapped with each other. Then, the tool change unit 126 moves the arm 38 to the Z-axis positive side, so that the used tool 102u is mounted in the pot 22, and the pre-use tool 102p is mounted on the spindle 116. By driving the translation mechanism and the rotation mechanism as described above, detachment and attachment of tools are performed for the pot 22 and the spindle 116, so that tool change is achieved. Since the operation itself of the tool change unit 126 is known, the detailed description thereof is omitted.

The illumination device 108 is arranged above a position where the target tool 102x is held, and the camera 106 is arranged therebelow.

The illumination device 108 functions as an "illuminator" and illuminates the target tool 102x from diagonally above. The camera 106 functions as an "imaging portion" and images the target tool 102x from diagonally below. The camera 106 and the illumination device 108 are arranged on opposite sides of the target tool 102x. Transmitted illumination by the illumination device 108 enables the camera 106 to acquire a high-contrast image in which the outline position of the tool 102 is easily viewable.

The camera 106 is fixed below the shutter 30. The pipe 404 is coupled to the camera 106. The light-receiving surface of the camera 106 can be covered with the first cover 304. The illumination device 108 can be covered with the second cover 306. Although the shapes of the first cover 304 and the second cover 306 are different from those in the embodiment, the mechanisms of opening and closing those covers by cylinders are identical to those in the embodiment. The first cover 304 is attached to be rotatable about the Z-axis as a rotation axis and is driven to rotate, as illustrated in FIG. 14. A first cylinder 305 coupled to the first cover 304 is caused to expand and contract by, for example, an operation of a built-in solenoid. It is assumed that the first cylinder 305 is coupled and fixed to a part of the shutter 30. The first cover 304 closes the light-receiving surface of the camera 106 in a state where the first cylinder 305 expands, and opens the light-receiving surface of the camera 106 in a state where the first cylinder 305 contracts. That is, the first cover 304 is movable between an open state where it opens the light-receiving surface of the camera 106 and a closed state where it closes the light-receiving surface. Air purge may also be performed for the illumination device 108. A mechanism of air purge is also identical to that in the embodiment.

Even in a case where the target tool 102x is long and the whole target tool cannot fit in the angle of view of the camera 106, the camera 106 can take a plurality of partial images of an imaging target part of the target tool 102x a plurality of times while moving together with the shutter 30. The "imaging target part" means a part that requires test for determination whether the target tool 102x is faulty (also a "test target part"), and is set in advance. In the present embodiment, a part of the target tool 102x from the proximal end supported by the pot 22 to the blade tip is set to the imaging target part. In the modification, only a part of the target tool 102x may be set to a test target part. For example, a part from the base to the tip of the blade may be set to the imaging target part, or only the tip of the blade may be set as the imaging target part.

A rotation axis Lt of the spindle 116, a rotation axis Lx of the tool change unit 126, the moving direction of the shutter 30, and the longitudinal direction of the target tool 102x at the standby position for tool change are designed to be parallel to one another (be all parallel to the Z-axis).

A structure of each of the main body 36 of the tool change unit 126, the opening/closing mechanism 32, the illumination device 108, and the like is stably fixed to a structure in the tool storage unit 130, such as a wall surface and a beam, although not illustrated. The camera 106 may be fixed to a structure in the containing chamber 10, such as a wall surface and a beam, without being fixed to the shutter 30. In this case, the first cylinder 305 is also fixed to the structure in the containing chamber 10, such as a wall surface and a beam, without being fixed to the shutter 30. In a case of the configuration in which the camera 106 is fixed to a structure, the mechanism involved in air purge of the camera 106 and the mechanism related to the first cover 304 are identical to those in the embodiment.

FIG. 10 illustrates the movable range 502 of the tool change unit 126 by the rotation operation and the translation operation thereof when tool change is performed. In the movable range 502 of the tool change unit 126, a disc-shaped space on the side close to the main body 36 indicates a passing area of the arm 38 when the pre-use tool 102p and the used tool 102u are grasped. In the movable range 502 of the tool change unit 126, a disc-shaped space on the side close to the distal end indicates a passing area of the arm 38 when the pre-use tool 102p and the used tool 102u are swapped with each other. A range in which the rotation axis of the tool change unit 126 moves is also included in the movable range 502 of the tool change unit 126.

The movable range 500 of the magazine 20 with the tool 102 stored therein, the movable range 502 of the tool change unit 126, and the movable range 504 of the first cover 304 are illustrated in FIGS. 10 and 14. As illustrated in FIG. 14, the movable range 504 of the first cover 304 is located below the movable range 502 of the tool change unit 126 (in the -X direction), and those ranges do not overlap each other, when viewed in the Z-axis direction (along the rotation axis Lt of the spindle 116, the rotation axis Lx of the tool change unit 126, the moving direction of the shutter 30, and the longitudinal direction of the target tool 102x at the standby position for tool change). Therefore, in a state where the first cover 304 is open, the first cover 304 is out of the movable range 500 of the magazine 20. Further, as illustrated in FIG. 14, the movable range 504 of the first cover 304 is located closer to the machining chamber than the movable range 500 of the magazine 20 (in the +Y direction), and those ranges do not overlap each other, when viewed in the Z-axis direction (along the rotation axis Lt of the spindle 116, the rotation axis Lx of the tool change unit 126, the moving direction of the shutter 30, and the longitudinal direction of the target tool 102x at the standby position for tool change). Therefore, in a state where the first cover 304 is open, the first cover 304 is out of the movable range 500 of the magazine 20 in which the tool 102 is stored. In this example, the pot of the magazine 20 in which the tool 102 is stored, for accommodating the tool, and the tool change unit 126 correspond to movable portions that can move when tool change is performed. Therefore, in a state where the first cover 304 is open, the first cover 304 is out of a movable range of these movable portions.

FIGS. 9 and 10 illustrate a state where the shutter 30 is closed. That is, the opening/closing mechanism 32 has moved the shutter 30 as much as possible to the Z-axis positive side in a movable range of the shutter 30. In this state, the camera 106 can image the pre-use tool 102p before being changed and the used tool 102u after being changed from diagonally below as illustrated in FIG. 14. In this case, the camera 106 images the tool 102 after the first cover 304 and the second cover 306 are opened. In order not to allow adhering matters to fall and adhere to the first cover 304 when the upper second cover 306 is opened, it is desirable to open the first cover 304 after opening the second cover 306.

An operation in a case of performing imaging for tool test in the first modification is described. It is assumed that only a blade tip is an imaging target part. First, tool change is prohibited, and the air purge controller 330 starts the pump 402 to start air purge. The opening/closing mechanism 32 then starts an operation of moving the shutter 30 in an opening direction.

When the camera 106 reaches a position where it images the blade tip, the opening/closing mechanism 32 stops the shutter 30. The cover controller 320 opens the first cover 304. The blade tip of the pre-use tool 102p is then imaged by the camera 106. After imaging, the cover controller 320 closes the first cover 304 once. The opening/closing mechanism 32 then fully opens the shutter 30, prohibition of tool change is lifted, and tool change is performed.

Prior to accommodating the tool after tool change, the used tool 102u is held horizontally in a standby state in the tool storage unit 130. The opening/closing mechanism 32 then starts an operation of moving the shutter 30 that is fully open in a closing direction.

When the camera 106 reaches the position where it images the blade tip, the opening/closing mechanism 32 stops the shutter 30, and the cover controller 320 opens the first cover 304. The blade tip of the used tool 102u is then imaged by the camera 106. After imaging, the cover controller 320 closes the first cover 304. The opening/closing mechanism 32 then further moves the shutter 30 in the closing direction. When the shutter 30 is closed, the air purge controller 330 stops the pump 402 to end air purge. The used tool 102u is then accommodated in the magazine 20 if it is normal.

In a case of the configuration in which the camera 106 is fixed to a structure, air purse is started in a state where the shutter 30 is closed, the first cover 304 is then opened, and the pre-use tool 102p is imaged by the camera 106. The cover controller 320 then closes the first cover 304 once. Thereafter, the opening/closing mechanism 32 fully opens the shutter 30, and tool change is performed.

After tool change, the opening/closing mechanism 32 closes the shutter 30 and opens the first cover 304. The used tool 102u is then imaged by the camera 106. After imaging, the cover controller 320 closes the first cover 304, and the air purge controller 330 stops the pump 402 to end air purge. The used tool 102u is then accommodated in the magazine 20 if it is normal.

### [Implementation example]

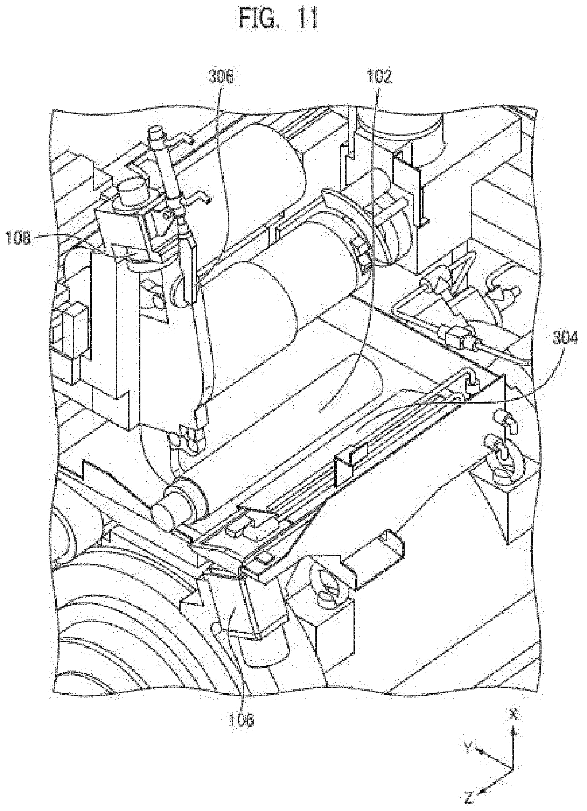

FIG. 11 is a perspective view of the tool recognition area 210 in an implementation example of the machine tool 100.

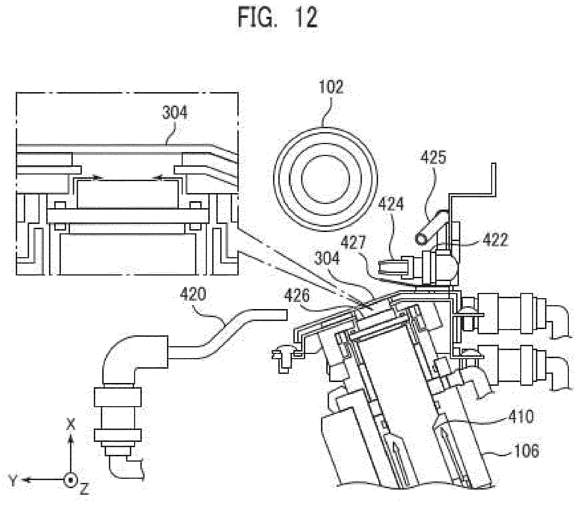

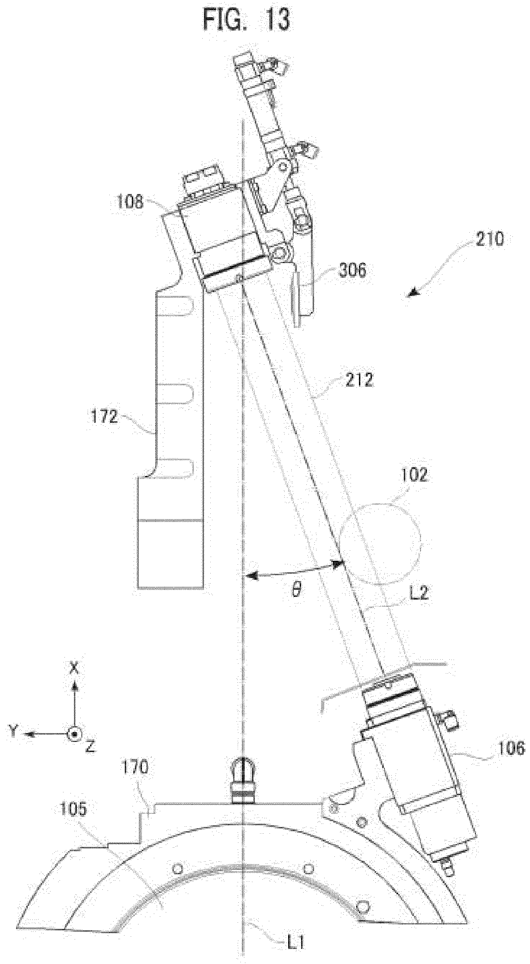

As described in the embodiment, the tool 102 is imaged from below by the camera 106. The illumination device 108 casts light on the tool 102 to be imaged, from above. The camera 106 is an imaging portion that images a tool. The first cover 304 will be described later in connection with FIGS. 12 and 13.

FIGS. 12 and 13 are side views of the tool recognition area 210 in the implementation example of the machine tool 100. Both the drawings illustrate the tool recognition area 210 when viewed along the axis of a workpiece spindle 105.

The workpiece spindle 105 is supported by a headstock 170 to be rotatable, and the camera 106 is fixed to the headstock 170. An arm 172 that supports the illumination device 108 is provided above the headstock 170. In tool test, an imaging target part (a part to be imaged for test) in the tool 102 is arranged in a test area 212. The optical axis L2 is inclined at an inclination angle θ in such a manner that the illumination device 108 and the second cover 306 do not overlap the camera 106 when viewed along the vertical line L1 (or viewed from above on the vertical line L1) (see the long-dashed double-dotted line parallel to the vertical line L1 in the drawings). Inclining the optical axis L2 moves the tool 102 to a position apart from the arm 172 to which the illumination device 108 is fixed. Therefore, imaging of the tool 102 having a large tool diameter also becomes possible.

The first cover 304 is a slidable shutter. The first cover 304 is moved to the Z-axis positive side to close the light-receiving surface of the camera 106, and is moved to the Z-axis negative side to open the light-receiving surface of the camera 106. The first cover 304 protects a lens surface 426 of the camera 106 against drop of a coolant or fall of swarf during automatic change of the tool 102. Therefore, the coolant cannot enter the camera 106, and swarf cannot be caught in the camera 106. As described above, the sliding first cover 304 is movable between an open state where it opens the light-receiving surface of the camera 106 and a closed state where it closes the light-receiving surface.

In this implementation example, a plurality of air blowers 420 are used. An air blower 420 removes swarf deposited on the first cover 304 by air blow. The swarf near the aperture of the camera 106 is also removed by the air blow from the air blower 420.

An air blower 422 blows off a coolant dripping from the tool 102 during imaging by air injected from a flat nozzle 424.

The coolant may adhere to the flat nozzle 424, and the accumulated coolant may fall. An air blower 425 blows off the coolant adhering to the flat nozzle 424. A gutter 427 receives the coolant dripping from the flat nozzle 424 to the lens surface 426. This configuration prevents the coolant from splashing on the lens surface 426.

By air purge that delivers compressed air to a gap between the first cover 304 and the lens surface 426, contamination of the lens surface 426 by the mist of coolant is prevented. The air flows from the side surface of the camera 106 to the front surface, and then flows out in the Z-axis direction, as illustrated with an arrow.

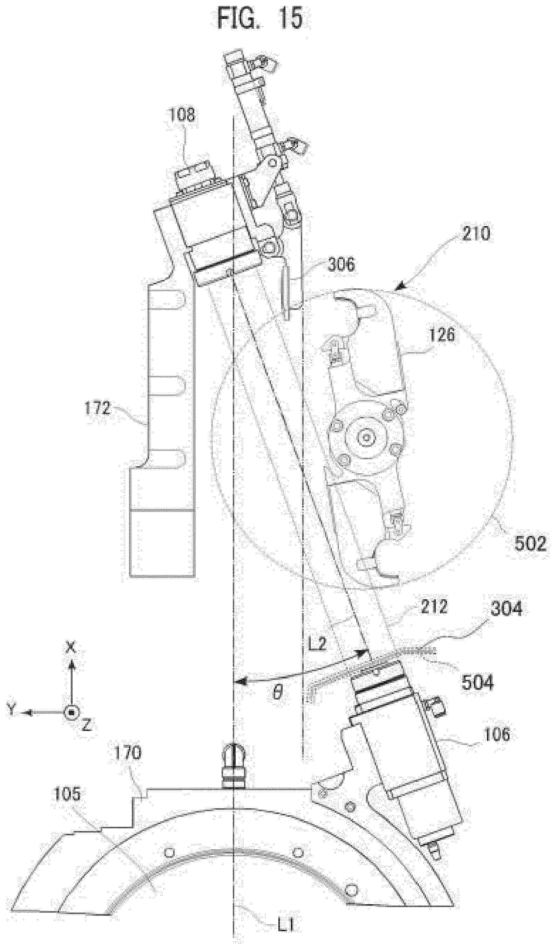

FIG. 15 is a side view illustrating the movable range 502 of the tool change unit 126 and the movable range 504 of the first cover 304.

The movable range 502 of the tool change unit 126 illustrated in FIG. 15 indicates an area through which the arm 172 passes in association with rotation of the arm 172. Since the first cover 304 slides along the Z-axis (see FIG. 11), the movable range 504 of the first cover 304 in FIG. 15 is coincident with an area of the cross-section of the first cover 304. As illustrated in FIG. 15, the movable range 504 of the first cover 304 is located below the movable range 502 of the tool change unit 126 (in the -X direction), and those ranges do not overlap each other, when viewed in the Z-axis direction (in the sliding direction of the first cover 304 and along the rotation axis of the tool change unit 126). Therefore, in a state where the first cover 304 is open (in a state where imaging can be performed by an imaging portion), the first cover 304 is out of the movable range 502 of the tool change unit 126.

### [Other modifications]

The first cover 304 may be provided on a frame (a housing) containing the camera 106. The camera 106 is accommodated in the frame, and the first cover 304 is attached to the frame. The configuration in which the first cover 304 covers the light-receiving surface of the camera 106 by being driven and rotating is identical to that in the embodiment.

Cleaning rotation and cleaning injection may be omitted. Alternatively, both cleaning rotation and cleaning injection may be performed.

In the present embodiment, adhering matters on the tool 102 have been described as being removed by rotation of the spindle 116 prior to tool test. In the modifications, the adhering matters on the tool 102 may be removed by vibrating the spindle 116 prior to tool test.

The processes in FIGS. 7 and 8 may be performed by a tool test program separately from a machining program that controls machining of a workpiece with the tool 102. Alternatively, the machining program may include both a cutting program that instructs cutting of a workpiece (cutting control algorithm) and the tool test program (tool test algorithm).

The present invention is not limited to the embodiment described above and modifications thereof, and any component thereof can be modified or embodied without departing from the scope of the invention. Components described in the embodiment and modifications can be combined as appropriate to form various embodiments. Some components may be omitted from the components presented in the embodiment and modifications.

Since the air purge operation has been performed at the time of opening the shutter 300 in the embodiment and the modifications described above, impurities, such as a coolant and swarf, entering from a machining area can be prevented from adhering to the light-receiving surface of the camera 106. In addition, since the first cover 304 is opened after the shutter 300 starts to be moved, the time in which the light-receiving surface of the camera 106 is exposed and may allow the impurities to adhere thereto can be shortened.

The above-described operations performed in order of opening of the shutter 300, opening of the second cover 306, opening of the first cover 304, imaging, closing the first cover 304, closing of the second cover 306, and closing of the shutter 300 are described again.

Air purge is performed as illustrated in S11 in FIG. 7. Thereafter, after cleaning rotation ends, the cover controller 320 starts an operation of opening the shutter 300 (a magazine shutter), as described in connection with S22 in FIG. 8. After the shutter 300 starts its opening operation, the cover controller 320 opens inner covers (the first cover 304 and the second cover 306), as described in connection with S24 in FIG. 8. At this time, the cover controller 320 opens the second cover 306 (an illumination shutter) first, and then opens the first cover 304 (a camera shutter). Subsequently, insertion of a tool and setting of a rotation angle are performed, and thereafter the tool checking unit 152 performs shape recognition for the tool 102 by acquiring a plurality of partial images, as descried in connection with S30 in FIG. 8. In this process, the camera 106 images the tool 102 attached to the spindle 116 from below (in the X-axis direction). After imaging, the cover controller 320 closes the inner covers (the first cover 304 and the second cover 306), as described in connection with S42 in FIG. 8. At this time, the cover controller 320 closes the first cover 304 (the camera shutter) first, and then closes the second cover 306 (the illumination shutter). Finally, the cover controller 320 closes the shutter 300 (the magazine shutter), as described in connection with S44 in FIG. 8.

Although the machine tool 100 has been described as an example of a machine in the embodiment and the modifications described above, the technology described in the embodiment and the modifications may be applied to a machine other than the machine tool 100, for example, a tool accommodation device that accommodates tools therein or a tool test device that images a tool.

## Claims

1. A machine tool comprising:
an imaging portion for imaging a tool in an imaging area;
a tool holding unit capable of holding the tool in the imaging area;
a shutter provided between a machining area and the imaging area, and being movable between an open state and a closed state;
a cover for covering a light-receiving surface of the imaging portion; and
a purge mechanism for performing purge by causing fluid to flow between the light-receiving surface of the imaging portion and the cover, wherein
(i) after the purge is performed by the purge mechanism, the machine tool (ii) moves the shutter, and (iii) moves the cover after start of moving of the shutter.

2. The machine tool according to claim 1, further comprising:
an illuminator, installed above the imaging portion, for casting light on the tool to be imaged; and
a cover for covering a light-emitting surface of the illuminator, wherein
the cover for covering the light-emitting surface of the illuminator is moved after start of moving of the shutter and before moving of the cover for covering the light-receiving surface of the imaging portion.

3. The machine tool according to claim 1, further comprising:
an illuminator, installed below the imaging portion, for casting light on the tool to be imaged; and
a cover for covering a light-emitting surface of the illuminator, wherein
the cover for covering the light-emitting surface of the illuminator is moved after the cover for covering the light-receiving surface of the imaging portion is moved.

4. A machine tool comprising:
an imaging portion for imaging a tool in an imaging area;
a tool holding unit capable of holding the tool in the imaging area;
a shutter provided between a machining area and the imaging area and being movable between an open state and a closed state;
a first cover for covering a light-receiving surface of the imaging portion;
an illuminator, installed above the imaging portion, for casting light on the tool to be imaged; and
a second cover for covering a light-emitting surface of the illuminator, wherein
the machine tool performs operations of (i) opening the shutter, (ii) opening the second cover, (iii) opening the first cover, (iv) causing the imaging portion to perform imaging, (v) closing the first cover, (vi) closing the second cover, and (vii) closing the shutter in that order.

5. A machine comprising:
a movable portion movable when tool change is performed;
an imaging portion for imaging a tool; and
a cover being movable between an open state where the cover opens a light-receiving surface of the imaging portion and a closed state where the cover closes the light-receiving surface, wherein
the cover is out of a movable range of the movable portion when the cover is in the open state.
